# EUROPÄISCHE PATENTANMELDUNG

(11) **EP 2 993 721 A1**
(43) Veröffentlichungstag der Anmeldung: **09.03.2016**
(21) Anmeldenummer: 15178845.2
(22) Anmeldetag: 29.07.2015
(51) Int. Cl.: H01M 8/0276, H01M 8/0286

(54) **MEMBRAN-ELEKTRODEN-ANORDNUNG MIT IN GASDIFFUSIONSSCHICHT GEDRÜCKTEM DICHTELEMENT UND HERSTELLVORRICHTUNG FÜR SOWIE VERFAHREN ZUM HERSTELLEN EINER MEMBRAN-ELEKTRODEN-ANORDNUNG**

(30) Priorität: 02.09.2014 DE 102014217509
(71) Anmelder: Volkswagen AG, 38440 Wolfsburg (DE)
(72) Erfinder: Bellerive, Julie, Burnaby, British Columbia, V5J 5J8 (CA); Cheng, Tommy, Burnaby, British Columbia, V5J 5J8 (CA)
(74) Vertreter: Gulde & Partner

(57) **Zusammenfassung**

Die Erfindung betrifft eine Membran-Elektroden-Anordnung (1) für eine Brennstoffzelle sowie ein Verfahren zum Herstellen und eine Herstellvorrichtung zur Herstellung einer solchen Membran-Elektroden-Anordnung (1). Um eine die Membran-Elektroden-Anordnung (1) aufweisende Brennstoffzelle mit einer hohen Energiedichte bereitstellen zu können, ist erfindungsgemäß vorgesehen, dass das Dichtelement (4) in die Gasdiffusionsschicht (3) hineingedrückt ist.

## Beschreibung

Die Erfindung betrifft eine Membran-Elektroden-Anordnung für eine Brennstoffzelle, mit einer Membran, mit zwei Elektroden, zwischen denen die Membran angeordnet ist, mit zwei Gasdiffusionsschichten, zwischen denen die Membran mit den zwei Elektroden angeordnet ist, und mit zwei Dichtelementen, von denen jeweils eines eine der Gasdiffusionsschichten kontaktiert. Ferner betrifft die Erfindung ein Verfahren zum Herstellen einer Membran-Elektroden-Anordnung für eine Brennstoffzelle, bei dem eine Membran zwischen zwei Elektroden angeordnet, je eine Gasdiffusionsschicht auf eine von der Membran weg weisenden Seite jeder der Elektroden ausgeformt, und je ein Dichtelement mit einer der Gasdiffusionsschichten in Kontakt gebracht wird. Darüber hinaus betrifft die Erfindung eine Herstellvorrichtung zur Herstellung einer Membran-Elektroden-Anordnung mit einer Gasdiffusionsschicht.

Membran-Elektroden-Anordnungen für Brennstoffzellen sowie Herstellvorrichtungen zur Herstellung sowie Verfahren zum Herstellen von Membran-Elektroden-Anordnungen für Brennstoffzellen sind allgemein bekannt.

Brennstoffzellen nutzen die chemische Umsetzung eines Brennstoffs mit Sauerstoff, um elektrische Energie zu erzeugen. Hierfür enthalten Brennstoffzellen als Kernkomponente Membran-Elektroden-Anordnungen, die jeweils als ein Verbund aus einer Ionen leitenden, insbesondere Protonen leitenden, Membran und jeweils einer beidseitig an der Membran angeordneten Elektrode (Anode und Kathode) ausgestaltet sein kann. Zudem können Gasdiffusionsschichten beidseitig der Membran-Elektroden-Einheit an den von der Membran abgewandten Seiten der Elektroden angeordnet sein. In der Regel weist die Brennstoffzelle eine Vielzahl im Stapel angeordneter Membran-Elektroden-Anordnungen auf, deren elektrische Leistungen sich addieren. Im Betrieb der Brennstoffzelle wird der Brennstoff, insbesondere Wasserstoff (H₂) oder ein wasserstoffhaltiges Gasgemisch, der Anode zugeführt, wo eine elektrochemische Oxidation von H₂ zu H⁺ unter Abgabe von Elektronen stattfindet. Über einen Elektrolyten oder die Membran, welche die Reaktionsräume gasdicht voneinander trennt und elektrisch isoliert, erfolgt ein wassergebundener oder wasserfreier Transport der Protonen (H⁺) aus dem Anodenraum in den Kathodenraum. Die an der Anode bereitgestellten Elektronen werden über eine elektrische Leitung der Kathode zugeleitet. Der Kathode wird Sauerstoff (O₂) oder ein sauerstoffhaltiges Gasgemisch zugeführt, sodass eine Reduktion von O₂ zu O²⁻ unter Aufnahme der Elektronen stattfindet. Gleichzeitig reagieren im Kathodenraum diese Sauerstoffanionen mit den über die Membran transportierten Protonen unter Bildung von Wasser. Durch die direkte Umsetzung von chemischer in elektrische Energie erzielen Brennstoffzellen gegenüber anderen Elektrizitätsgeneratoren aufgrund der Umgehung des Carnot-Faktors einen verbesserten Wirkungsgrad.

Die Brennstoffzelle wird also durch eine Vielzahl im Stapel angeordneter Einzelzellen gebildet, sodass auch vom Brennstoffzellenstapel gesprochen wird. Zwischen den Membran-Elektroden-Anordnungen sind Bipolarplatten angeordnet, welche eine Versorgung der Einzelzellen mit den Betriebsmedien, also den Reaktanden, und einem Temperiermedium, sicherstellen. Zudem können die Bipolarplatten für einen elektrisch leitfähigen Kontakt zu den Membran-Elektroden-Einheiten sorgen.

Um nun zu verhindern, dass eines der Betriebsmedien seitlich aus der Membran-Elektroden-Anordnung ungewünscht abfließen kann, ist das Dichtelement vorgesehen, das beispielsweise eine an der Reaktion der Betriebsmedien beteiligte Fläche der Membran-Elektroden-Anordnung umläuft. Dabei ist jedoch zu beachten, dass für gängige Brennstoffzellenvorrichtungen eine Vielzahl von Membran-Elektroden-Anordnungen miteinander gestapelt wird. Je dicker die Membran-Elektroden-Anordnung ist, desto geringer ist die Leistungsdichte einer solchen Brennstoffzellenvorrichtung. Folglich wird angestrebt, die Membran-Elektroden-Anordnung möglichst dünn auszugestalten, um eine Brennstoffzellenvorrichtung mit einer hohen Energiedichte bereitstellen zu können.

Bei bekannten Brennstoffzellenvorrichtungen wird versucht, eine Erhöhung der Dicke der Membran-Elektroden-Anordnung, die durch das Dichtelement verursacht wird, dadurch zu verringern, dass das Dichtelement in einer Mulde, die in einer an die Membran-Elektroden-Anordnung anliegenden Bipolarplatte vorgesehen ist, angeordnet wird. Die Mulde resultiert jedoch wiederum in einer gewissen Mindestdicke der Bipolarplatte, die die Energiedichte begrenzt.

Der Erfindung liegt nun die Aufgabe zugrunde, eine Membran-Elektroden-Anordnung sowie ein Verfahren zum Herstellen und eine Herstellvorrichtung zum Herstellen einer Membran-Elektroden-Anordnung bereitzustellen, wobei durch Verwendung der Membran-Elektroden-Anordnung eine Brennstoffzellenvorrichtung mit einer hohen Energiedichte herstellbar ist.

Für die eingangs genannte Membran-Elektroden-Anordnung ist die Aufgabe dadurch gelöst, dass zumindest eines der Dichtelemente in die Gasdiffusionsschicht hineingedrückt ist. Die Aufgabe ist für das eingangs genannte Verfahren dadurch gelöst, dass wenigstens eines der Dichtelemente in die Gasdiffusionsschicht, mit die das Dichtelement in Kontakt gebracht wurde, eingedrückt wird. Für die eingangs genannte Herstellvorrichtung ist die Aufgabe durch eine Presseinrichtung gelöst, wobei die Presseinrichtung ausgebildet ist, ein Dichtelement in die Gasdiffusionsschicht zu pressen.

Dadurch, dass das Dichtelement in die Gasdiffusionsschicht hineingedrückt ist, verringert sich eine Gesamtdicke der Membran-Elektroden-Anordnung, sodass eine die Membran-Elektroden-Anordnung aufweisende Brennstoffzellenvorrichtung mit einer höheren Energiedichte betrieben werden kann. Darüber hinaus ist die Porosität der zusammengedrückten Gasdiffusionsschicht geringer als die Porosität eines nicht durch das Dichtelement zusammengedrückten Abschnitts der Gasdiffusionsschicht, sodass im Bereich des Dichtelementes die Gasdiffusionsschicht eine geringere Gasdurchlässigkeit aufweist und die Dichtwirkung erhöht ist.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile ist im Folgenden eingegangen.

So können die Gasdiffusionsschicht, in die das Dichtelement hineingedrückt ist, und das in die Gasdiffusionsschicht hineingedrückte Dichtelement miteinander fluchten. Fluchten das Dichtelement und die Gasdiffusionsschicht miteinander, sodass das Dichtelement nicht von der Gasdiffusionsschicht vorspringt oder die Gasdiffusionsschicht weg von der Membran überragt, ist die minimal mögliche Dicke der Membran-Elektroden-Anordnung erreicht.

Beispielsweise kann das Dichtelement an eine von der Membran weg weisende Seite einer der Gasdiffusionsschichten angelegt werden und dann in diese eingedrückt sein oder werden. Ferner können die von der Membran weg weisende Seite der Gasdiffusionsschicht, in die das Dichtelement hineingedrückt ist, und die von der Membran weg weisende Seite des des Dichtelementes miteinander fluchten. Fluchten die beiden von der Membran weg weisenden Seiten miteinander, so ist die minimal mögliche Dicke der Membran-Elektroden-Anordnung erreicht.

Beim Verfahren zum Herstellen der Membran-Elektroden-Anordnung kann das Dichtelement so weit in die Gasdiffusionsschicht eingedrückt werden, dass das Dichtelement und zum Beispiel die von der Membran weg weisende Seiten des Dichtelementes und die Gasdiffusionsschicht und insbesondere dessen von der Membran weg weisende Seite miteinander fluchten.

Um zu verhindern, dass die Gasdurchlässigkeit in einem an der Reaktion der Betriebsmedien beteiligten Abschnitt der Gasdiffusionsschicht verschlechtert ist, ist ein nicht vom Dichtelement zusammengedrückter Abschnitt der Gasdiffusionsschicht vorzugsweise nicht zusammengedrückt. Der an der Reaktion der Betriebsmedien beteiligte Abschnitt ist nämlich ausgebildet, eines der Betriebsmedien senkrecht zur Membran-Elektroden-Anordnung passieren zu lassen. Weist dieser Abschnitt eine unzureichende Gasdurchlässigkeit auf, nimmt die mit der Brennstoffzelle maximal bereitstellbare elektrische Leistung ab.

Alternativ kann eine das Dichtelement in die Gasdiffusionsschicht drückende Kraft auch in einen an das Dichtelement angrenzenden Abschnitt einwirken, um zu gewährleisten, dass das Dichtelement vollständig mit der Kraft beaufschlagt wird.

Dadurch, dass nur das Dichtelement und nicht an der Reaktion der Betriebsmedien beteiligte Abschnitte der Gasdiffusionsschicht komprimiert werden, sinkt eine Gasdiffusionsrate oder Flächenpermeabilität der nicht komprimierten Gasdiffusionsschicht nicht. Würde die gesamte Schicht komprimiert, um die Dicke der Membran-Elektroden-Anordnung zu verringern, würde jedoch die Menge an Betriebsmedium, das durch die Membran-Elektroden-Anordnung bei einem vorgegebenen Druck strömen könnte, verringert. Beispielsweise liegt die Menge an Betriebsmedium, das im Betrieb durch die nicht komprimierten Abschnitte der Gasdiffusionsschicht strömen kann, bei 1,54 ml pro Minute. Der Betriebsmediendruck kann im Betrieb beispielsweise 1,6 Megapascal betragen. Würde die gesamte Gasdiffusionsschicht komprimiert, sänke die Durchlässigkeit der Gasdiffusionsschicht, wodurch die Leistungsfähigkeit einer die Membran- Elektroden-Anordnung aufweisenden Brennstoffzelle sinken würde.

Beim Herstellverfahren kann also eine Eindrückkraft beim Eindrücken lediglich in das Dichtelement und vorzugsweise nicht in Abschnitte der Gasdiffusionsschicht, auf denen das Dichtelement nicht aufliegt, eingebracht werden.

Um nur einen Druck auf das Dichtelement und nicht auf an das Dichtelement angrenzende und nicht von diesem zu komprimierende Abschnitte der Gasdiffusionsschicht ausüben zu können, kann die Presseinrichtung ein Presswerkzeug aufweisen, dessen Wirkquerschnitt der Form des Dichtelementes entspricht.

Alternativ kann der Wirkungsquerschnitt etwas größer dimensioniert sein als das Dichtelement, um zu gewährleisten, dass das Dichtelement vollständig am Presswerkzeug anliegt, selbst wenn das Dichtelement und das Presswerkzeug nicht perfekt zueinander ausgerichtet sind.

Zum Beispiel kann die Herstellvorrichtung eine zweite Beschichtungseinrichtung zum Aufbringen des Dichtelementes aufweisen, wobei die zweite Beschichtungseinrichtung eine die Form des Dichtelementes vorgebende Maske aufweisen kann, und wobei der Wirkquerschnitt des Presswerkzeuges im Wesentlichen komplementär zur Maske ausgeformt ist. Beispielsweise kann der Wirkquerschnitt einer Pressfläche des Presswerkzeuges entsprechen, wobei der Wirkquerschnitt der Form einer dem Presswerkzeug zu gewandten Seite des Dichtelementes entspricht. Ein Aufbringen der Presskraft direkt auf die Gasdiffusionsschicht findet also nicht statt. Das Presswerkzeug bringt die Presskraft lediglich auf das Dichtelement auf, sodass die Gasdiffusionsschicht lediglich dort, wo das Dichtelement in diese eingepresst wird, komprimiert wird.

Ist nicht die Dicke der Membran-Elektroden-Anordnung sondern die Gasdurchlässigkeit oder Permeabilität der Gasdiffusionsschicht zu verbessern, so kann die erfindungsgemäße Membran-Elektroden-Anordnung bei einer gleichen Dicke wie eine bekannte Membran-Elektroden-Anordnung eine verbesserte Permeabilität aufweisen, da die Gasdiffusionsschicht im Vergleich zu bekannten Membran-Elektroden-Anordnungen dicker ausgestaltet sein kann. Durch das in die Gasdiffusionsschicht hineingedrückte Dichtelement ist die Dicke der Membran-Elektroden-Anordnung bei einer dickeren Gasdiffusionsschicht nicht größer als bei bekannten Membran-Elektroden-Anordnungen mit einer vergleichsweise dünneren Gasdiffusionsschicht.

Beim Aufbringen des Dichtelementes kann ein das Dichtelement ausformendes Material beispielsweise flüssig sein und auf die Gasdiffusionsschicht aufgedruckt werden. Um die Form des Dichtelementes vorzugeben, kann die Maske bereitgestellt sein. Insbesondere nachdem das das Dichtelement ausformende Material getrocknet beziehungsweise gehärtet ist, kann das Dichtelement in die Gasdiffusionsschicht gepresst werden. Alternativ kann das Material in einem Schritt gepresst und gehärtet beziehungsweise getrocknet werden, wenn das Presswerkzeug beispielsweise beheizbar ist. Sollte das das Dichtelement ausformende Material nicht durch Wärme, sondern durch Bestrahlung, beispielsweise mit UV-Licht, härtbar sein, kann das Presswerkzeug für derartige Bestrahlung transparent sein.

Das Dichtelement kann die folgenden Materialien aufweisen oder sogar aus diesen bestehen: Thermoplast oder Duroplast, beispielsweise Polyvinylidenefluorid oder -chlorid, Polypropylen, Polyethylen, Polyolefin, Polytetrafluorethylen, oder aromatische Thermoplasten, wie etwa Polyarylether, Polyetheretherketon, Polysulfon usw. Beispiele für Duroplaste sind Polyimid, Epoxi, Polyurethan, Nitril, Butyl, thermoplastische Elastomere usw.

Um das Dichtelement in die Gasdiffusionsschicht hineinpressen zu können, kann ein Druck auf das Dichtelement ausgeübt werden, der beispielsweise zwischen 1 mg/cm² und 20 mg/cm² und insbesondere zwischen 5 mg/cm² und 10 mg/cm² und beispielsweise bei etwa 6 mg/cm² liegen kann. Die Gasdiffusionsschicht kann im nicht komprimierten Zustand eine Dicke aufweisen, die zwischen 10 µm und 100 µm und beispielsweise zwischen 40 µm und 60 µm, sowie etwa bei 44 µm liegen kann.

Das Presswerkzeug kann als ein durch die Presseinrichtung bewegbares Werkzeug aus einem festen Material, zum Beispiel Kunststoff oder Metall, ausgebildet sein. Alternativ kann das Presswerkzeug als eine zwischen einen Pressstempel der Presseinrichtung und das Dichtelement legbare Schablone ausgebildet sein, deren Pressfläche beim Eindrücken des Dichtelementes auf diesem aufliegt.

Die Erfindung ist nachfolgend in Ausführungsbeispielen anhand der zugehörigen Zeichnungen erläutert. Es zeigen:
- Figur 1: eine schematische Darstellung eines Ausführungsbeispiels der erfindungsgemäßen Membran-Elektroden-Anordnung in einer Aufsicht,
- Figuren 2 bis 4: schematische Schnittdarstellungen des Ausführungsbeispiels der Figur 1 und mit einem Ausführungsbeispiel eines Presswerkzeuges einer erfindungsgemäßen Herstellvorrichtung, und
- Figur 5: eine schematische Darstellung eines Ausführungsbeispiels eines erfindungsgemäßen Herstellverfahrens.

Im Folgenden ist die Erfindung beispielhaft anhand von Ausführungsformen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde.

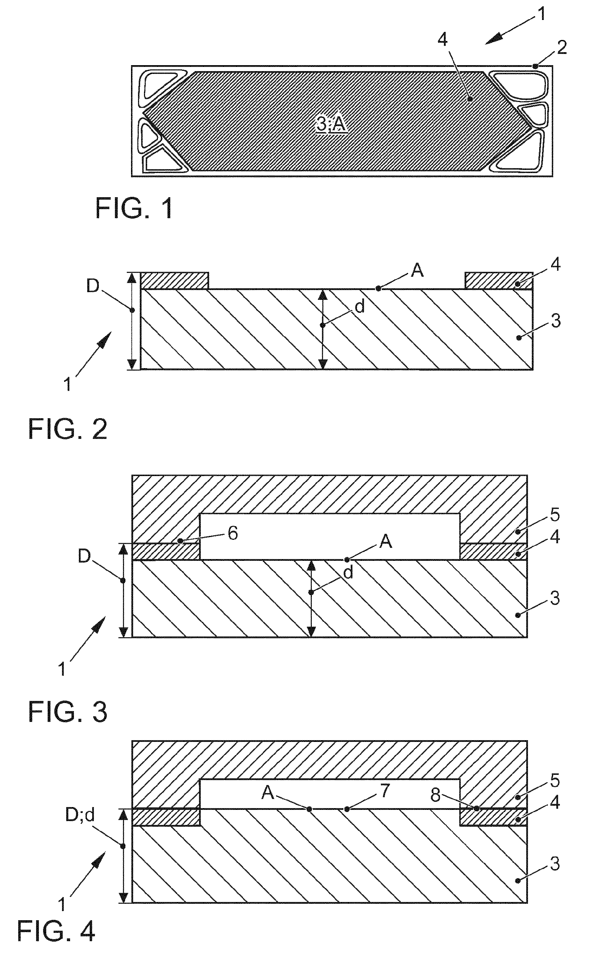

Zunächst sind Aufbau und Funktion einer erfindungsgemäßen Membran-Elektroden-Anordnung mit Bezug auf das Ausführungsbeispiel der Figur 1 beschrieben.

Figur 1 zeigt die Membran-Elektroden-Anordnung 1 mit einem Membranträger 2 schematisch in einer Aufsicht. Am Membranträger 2 ist eine Membran angebracht. Auf der Membran liegt eine Elektrode auf, die im Ausführungsbeispiel der Figur 1 durch eine Gasdiffusionsschicht 3 verdeckt ist. Auf der Gasdiffusionsschicht 3 ist ein Dichtelement 4 angeordnet, welches verhindert, dass ein womöglich gasförmiges Betriebsmedium für eine Brennstoffzelle seitlich aus der Gasdiffusionsschicht 3 herausfließen kann. Das Dichtelement 4 umläuft einen Bereich A der Gasdiffusionsschicht 3, der nicht durch das Dichtelement 4 zusammengedrückt oder komprimiert ist. Der Bereich A ist an der Reaktion der Betriebsmedien beteiligt, wobei die Gasdiffusionsschicht 3 eines der Betriebsmedien senkrecht zur Membran-Elektroden-Anordnung 1 passieren lässt.

Die Membran-Elektroden-Anordnung 1 ist vorzugsweise symmetrisch mit Bezug auf den Membranträger 2 ausgebildet, sodass sie zwei Elektroden aufweist, zwischen denen die Membran angeordnet ist. Ferner kann die Membran-Elektroden-Anordnung 1 zwei Gasdiffusionsschichten 3 aufweisen, zwischen denen die Membran und die beiden Elektroden angeordnet sind. Darüber hinaus kann die Membran-Elektroden-Anordnung 1 zwei Dichtelemente 4 aufweisen, zwischen denen die Membran, die beiden Elektroden und die beiden Gasdiffusionsschichten 3 angeordnet sind. Auf den von der Membran weg weisenden Seiten jeder der Gasdiffusionsschichten 3 kann jeweils eines der Dichtelemente 4 angeordnet sein, wobei wenigstens eines der Dichtelemente 4 und vorzugsweise beide der Dichtelemente 4 in die jeweilige Gasdiffusionsschicht 3 hineingedrückt sind.

Figur 2 zeigt das Ausführungsbeispiel der Figur 1 schematisch in einer seitlichen Schnittansicht und als ein Halbprodukt. Für Elemente, die in Funktion und/oder Aufbau Elementen des Ausführungsbeispiels der Figur 1 entsprechen, sind dieselben Bezugszeichen verwendet. Der Kürze halber ist im Folgenden lediglich auf die Unterschiede zum Ausführungsbeispiel der Figur 1 eingegangen.

Im Ausführungsbeispiel der Figur 2 liegt das Dichtelement 4 auf der Gasdiffusionsschicht 3 auf. Das Dichtelement 4 springt von der Gasdiffusionsschicht 3 vor, sodass eine Gesamtdicke D der Gasdiffusionsschicht 3 und des Dichtelementes 4 größer ist, als eine Dicke d der Gasdiffusionsschicht 3 alleine. Das Dichtelement 4 ist beispielsweise eine auf die Gasdiffusionsschicht 3 aufgedruckte Schicht aus einem das Dichtelement 4 bildenden Material. Im Ausführungsbeispiel der Figur 2 kann das Dichtelement 4 ausbildende Material bereits ausgehärtet oder noch nicht ausgehärtet sein.

Figur 3 zeigt das Ausführungsbeispiel der Figur 2 mit einem Presswerkzeug einer erfindungsgemäßen Herstellvorrichtung zur Herstellung der Membran-Elektroden-Anordnung 1 schematisch in der seitlichen Schnittdarstellung der Figur 2. Für Elemente, die in Funktion und/oder Aufbau Elementen des Ausführungsbeispiels der Figur 2 entsprechen, sind dieselben Bezugszeichen verwendet. Der Kürze halber ist im Folgenden lediglich auf die Unterschiede zum Ausführungsbeispiel der Figur 2 eingegangen.

Im Ausführungsbeispiel der Figur 3 ist ein Presswerkzeug 5 einer der Übersichtlichkeit halber nicht dargestellten Presseinrichtung der Herstellvorrichtung dargestellt. Eine Pressfläche 6 des Presswerkzeuges 5 liegt an einer von der Gasdiffusionsschicht 3 weg weisenden Seite des Dichtelementes 4 an. Wie im Ausführungsbeispiel der Figur 3 dargestellt, entspricht die Form der Pressfläche 6 vorzugsweise der Form des Dichtelementes 4, sodass das Presswerkzeug 5 bei der Herstellung der Membran-Elektroden-Anordnung 1 lediglich auf dem Dichtelement 4 lastet. Vorzugsweise lastet die Pressfläche 6 vollflächig auf dem Dichtelement 4, sodass es eine das Dichtelement 4 in die Gasdiffusionsschicht 3 pressende Kraft vollflächig in das Dichtelement 4 einleiten kann.

Das Presswerkzeug 5 kann als eine Schablone vorgesehen sein, deren Form der Form des Dichtelementes 4 entsprechen und die zwischen einem Pressstempel der Presseinrichtung und das Dichtelement 4 gelegt sein kann, um zu gewährleisten, dass die durch den Pressstempel bereitgestellte Presskraft nur am Dichtelement 4 und nicht direkt an der Gasdiffusionsschicht 3 anliegt. Alternativ zum Vorsehen einer Schablone kann das Presswerkzeug 5 Teil der Presseinrichtung und beispielsweise des Pressstempels sein, wobei die Pressfläche 6 am Presswerkzeug 5 angeordnet und entsprechend der Form des Dichtelementes 4 ausgeformt ist.

Wird das Dichtelement 4 mithilfe einer Maske auf die Gasdiffusionsschicht 3 aufgebracht und beispielsweise aufgedruckt, so ist die Pressfläche 6 vorzugsweise komplementär zur Maske ausgebildet.

Figur 4 zeigt das Ausführungsbeispiel der Figur 3, wobei das Dichtelement 4 im Ausführungsbeispiel der Figur 4 nunmehr durch das Presswerkzeug 5 in die Gasdiffusionsschicht 3 eingedrückt ist.

Um zu gewährleisten, dass die Membran-Elektroden-Anordnung 1 die minimal mögliche Gesamtdicke D aufweisen kann, ist das Dichtelement 4 so weit in die Gasdiffusionsschicht 3 eingedrückt, dass das Dichtelement 4 mit der Gasdiffusionsschicht 3 und beispielsweise eine von der Membran weg weisende Seite 7 der Gasdiffusionsschicht 3 mit einer von der Membran weg weisenden Seite 8 des Dichtelementes 4 fluchtet. Die Gesamtdicke D der Membran-Elektroden-Anordnung 1 entspricht also der Dicke d der Gasdiffusionsschicht 3. Dabei kann das Dichtelement 4 mit der Gasdiffusionsschicht 3 und beispielsweise die von der Membran weg weisenden Seite 8 des Dichtelementes 4 insbesondere mit der von der Membran weg weisenden Seite 7 der Gasdiffusionsschicht 3 fluchten, wenn die Membran-Elektroden-Anordnung 1 an einer Bipolarplatte montiert oder mit anderen Membran-Elektroden-Anordnungen 1 zum Brennstoffzellenstapel zusammengesetzt ist. Sollte beim Herstellen der Membran-Elektroden-Anordnung 1 die Gasdiffusionsschicht 3 nicht nur plastisch sondern auch elastisch durch das Dichtelement 4 zusammengedrückt sein, kann das Dichtelement 4 während des Herstellverfahrens etwas weiter als dargestellt in die Gasdiffusionsschicht 3 hineingedrückt werden. Wird das Presswerkzeug 4 entfernt, so kann sich die Gasdiffusionsschicht 3 elastisch entspannen, bis das Dichtelement 4 und die Gasdiffusionsschicht 3 und insbesondere deren Seiten 7, 8 miteinander fluchten.

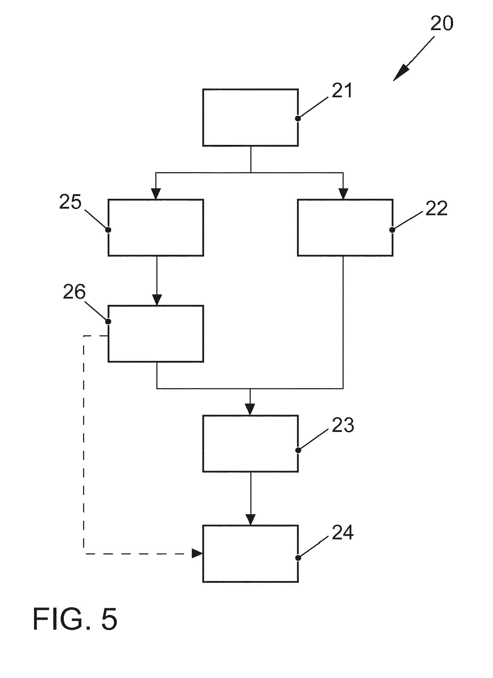

Figur 5 zeigt ein Ausführungsbeispiel eines erfindungsgemäßen Verfahrens zum Herstellen einer Membran-Elektroden-Anordnung 1 für eine Brennstoffzelle. Für in den Figuren 1 bis 4 dargestellte Elemente, die im Folgenden zur Erläuterung des erfindungsgemäßen Verfahrens verwendet sind, sind dieselben Bezugszeichen verwendet.

Im Ausführungsbeispiel der Figur 5 beginnt das Verfahren 20 mit einem ersten Verfahrensschritt 21, in dem beispielsweise die Gasdiffusionsschicht 3 auf eine Elektrode der Membran-Elektroden-Anordnung 1 aufgebracht wird. Auf den Verfahrensschritt 21 kann der Verfahrensschritt 22 folgen, in dem das Dichtelement 4 auf die Gasdiffusionsschicht 3 aufgebracht wird. Im nun folgenden Verfahrensschritt 23 wird das Dichtelement 4 in die Gasdiffusionsschicht 3 eingedrückt, zum Beispiel bis das Dichtelement 4 und die Gasdiffusionsschicht 3, beziehungsweise die von der Membran weg weisenden Seiten 7, 8 der Gasdiffusionsschicht 3 und des Dichtelementes 4 der Membran-Elektroden-Anordnung 1 miteinander fluchten.

Auf den Verfahrensschritt 23 folgt der Verfahrensschritt 24, in dem das Verfahren 20 endet. Beispielsweise kann die Membran-Elektroden-Anordnung 1 im Verfahrensschritt 24 einem weiteren Verfahren zum Herstellen einer Brennstoffzelle zugeführt werden.

Optional kann auf den Verfahrensschritt 21 der Verfahrensschritt 25 folgen, in dem ein das Dichtelement 4 ausformendes Material auf die Gasdiffusionsschicht 3 aufgebracht wird. Beispielsweise kann das das Dichtelement 4 ausformende Material auf die Gasdiffusionsschicht 3 aufgedruckt werden. Im Gegensatz zum Aufbringen des fertigen Dichtelementes 4 im Verfahrensschritt 22 kann es nach dem Verfahrensschritt 25 notwendig sein, das Material für das Dichtelement 4 in einem auf den Verfahrensschritt 24 folgenden Verfahrensschritt 26 auszuhärten und dadurch das Dichtelement 4 auszuformen. Zum Aushärten des Materials kann dieses beispielsweise erwärmt oder bestrahlt werden. Zum Beispiel kann das Material durch ultraviolette Strahlung ausgehärtet werden. Sollte das Material durch Bestrahlung ausgehärtet werden, kann das Presswerkzeug 5 ausgebildet sein, diese Strahlung zum Material für das Dichtelement 4 zu leiten. Insbesondere ein thermisch aushärtbares Material zur Ausformung des Dichtelementes 4 ist vorteilhaft, da ein für Strahlung transparentes Presswerkzeug 5 womöglich nicht ohne Weiteres herstellbar ist. Ist das Material thermisch aushärtbar, kann das Presswerkzeug 5 beheizbar sein.

Auf den Verfahrensschritt 26 kann der Verfahrensschritt 23 und auf diesem der Verfahrensschritt 24 folgen. Vorzugsweise wird das Dichtelement 4 jedoch im Verfahrensschritt 26 ausgehärtet und ebenfalls im Verfahrensschritt 26 in die Gasdiffusionsschicht 3 hineingedrückt. Beispielsweise kann das Material durch das Presswerkzeug 5 erwärmt und dadurch ausgehärtet werden.

### Bezugszeichenliste

- 1: Membran-Elektroden-Anordnung
- 2: Membranträger
- 3: Gasdiffusionsschicht
- 4: Dichtelement
- 5: Presswerkzeug
- 6: Pressfläche
- 7: Von der Membran weg weisende Seite der Gasdiffusionsschicht
- 8: Von der Membran weg weisende Seite des Dichtelementes

- 20: Verfahren
- 21: Start
- 22: Dichtelement auf Gasdiffusionsschicht aufbringen
- 23: Dichtelement in Gasdiffusionsschicht eindrücken
- 24: Ende
- 25: Material für Dichtelement auf Gasdiffusionsschicht aufbringen
- 26: Material aushärten und Dichtelement ausformen
- A: nicht durch das Dichtelement zusammengedrückter Abschnitt der Gasdiffusionsschicht
- d: Dicke der Gasdiffusionsschicht
- D: Gesamtdicke der Membran-Elektroden-Anordnung

## Patentansprüche

1. Membran-Elektroden-Anordnung (1) für eine Brennstoffzelle, mit einer Membran, mit zwei Elektroden, zwischen denen die Membran angeordnet ist, mit zwei Gasdiffusionsschichten (3), zwischen denen die Membran mit den zwei Elektroden angeordnet ist, und mit zwei Dichtelementen (4), von denen jeweils eines eine der Gasdiffusionsschichten (3) kontaktiert, **dadurch gekennzeichnet, dass** zumindest eines der Dichtelemente (4) in die Gasdiffusionsschicht (3) hineingedrückt ist.

2. Membran-Elektroden-Anordnung (1) nach Anspruch 1, **dadurch gekennzeichnet, dass** das Dichtelement (4) so weit in die Gasdiffusionsschicht (3) hineingedrückt ist, dass die Gasdiffusionsschicht (3) und das Dichtelement (4) miteinander fluchten.

3. Membran-Elektroden-Anordnung (1) nach Anspruch 1 oder 2, **dadurch gekennzeichnet, dass** ein nicht vom Dichtelement (4) zusammengedrückter Abschnitt (A) der Gasdiffusionsschicht (3) nicht zusammengedrückt ist.

4. Verfahren (20) zum Herstellen einer Membran-Elektroden-Anordnung (1) für eine Brennstoffzelle, bei dem eine Membran zwischen zwei Elektroden angeordnet, je eine Gasdiffusionsschicht (3) auf eine von der Membran weg weisenden Seite jeder der Elektroden ausgeformt, und je ein Dichtelement (4) mit einer der Gasdiffusionsschichten (3) in Kontakt gebracht wird (22, 25), **dadurch gekennzeichnet, dass** wenigstens eines der Dichtelemente (4) in die Gasdiffusionsschicht (3), mit der das Dichtelement (4) in Kontakt gebracht wurde, eingedrückt wird (23, 25).

5. Verfahren (20) nach Anspruch 4, **dadurch gekennzeichnet, dass** das Dichtelement (4) so weit in die Gasdiffusionsschicht (3) eingedrückt wird, dass die Gasdiffusionsschicht (3) und das Dichtelement (4) miteinander fluchten.

6. Verfahren (20) nach Anspruch 4 oder 5, **dadurch gekennzeichnet, dass** eine Eindrückkraft zum Eindrücken des Dichtelementes (4) lediglich in das Dichtelement (4) eingebracht wird.

7. Verfahren (20) nach Anspruch 4 oder 5, **dadurch gekennzeichnet, dass** eine Eindrückkraft zum Eindrücken des Dichtelementes (4) in das Dichtelement (4) und in einen an das Dichtelement (4) angrenzenden Abschnitt der Gasdiffusionsschicht (3) eingebracht wird.

8. Herstellvorrichtung zur Herstellung einer Membran-Elektroden-Anordnung (1) mit einer Gasdiffusionsschicht (3), **gekennzeichnet durch** eine Presseinrichtung, die ausgebildet ist, ein Dichtelement (4) in die Gasdiffusionsschicht (3) zu pressen.

9. Herstellvorrichtung nach Anspruch 8, **gekennzeichnet durch** eine Beschichtungseinrichtung zum Aufbringen eines Dichtelementes (4), die eine die Form des Dichtelementes (4) vorgebende Maske aufweist, wobei die Presseinrichtung ein Presswerkzeug (5) mit einem im Wesentlichen komplementär zur Maske ausgeformten Wirkquerschnitt aufweist.
